# EUROPEAN PATENT SPECIFICATION

(11) **EP 3 778 071 B1**
(45) Date of publication and mention of the grant of the patent: **26.04.2023**
(21) Application number: 19191589.1
(22) Date of filing: 13.08.2019
(51) Int. Cl.: B22F 3/105, B33Y 30/00, B29C 64/277, B29C 64/273, B29C 64/153, B33Y 10/00, B22F 10/28, B22F 10/36, B22F 12/43, B22F 12/44, B22F 12/49, B22F 12/20, B22F 12/33, B22F 12/45

(54) **SYSTEM AND METHOD FOR LARGE SCALE ADDITIVE MANUFACTURING**
SYSTEM UND VERFAHREN ZUR GROSSSKALIGEN GENERATIVEN FERTIGUNG
SYSTÈME ET PROCÉDÉ DE FABRICATION ADDITIVE À GRANDE ÉCHELLE

(43) Date of publication of application: 17.02.2021
(73) Proprietor: Volvo Car Corporation, 40531 Göteborg (SE)
(72) Inventor: ORBAY, Raik, 475 40 Höno (SE)
(74) Representative: Kransell & Wennborg KB

(56) References cited:
- WO-A1-2018/212420
- WO-A1-2019/005602
- US-A1- 2019 070 793
- Jouni P. Partanen: "Solid state lasers for stereolithography", , 1 January 1996 (1996-01-01), pages 369-376, XP055654055, DOI: 10.15781/T2X34NB7Q Retrieved from the Internet: URL:http://hdl.handle.net/2152/70259 [retrieved on 2019-12-18]

## Description

### TECHNICAL FIELD

The present disclosure relates to a system and method for large scale additive manufacturing.

### BACKGROUND

Additive manufacturing, also referred to as 3D-printing, is becoming increasingly popular due to the flexibility provided by the manufacturing method. Additive manufacturing may, for example, be used for on-demand manufacturing of spare parts for e.g. the transportation and automotive industry. Many new CAE (Computer Aided Engineering) approaches produce optimum component topologies which are not so easily amenable for production using conventional techniques as casting, welding, stamping/pressing, forging, extrusion, shear spinning, hydroforming, etc. due to their intricate details.

One type of additive manufacturing method is the powder bed fusion method (PBF) where a laser is applied to a powdered alloy material located on a work surface or in a mold. A power bed fusion additive manufacturing system typically comprises a laser system arranged to melt powdered alloy material located on a workbench. However, existing additive manufacturing systems are often limited in yield and size and are thereby not suitable for mass production. This affects the costs of additive manufacturing produced parts and components negatively and restrains their application to prototypes, low number luxury vehicles and or race vehicle engineering.

Accordingly, improvements are required in order to facilitate large scale production using additive manufacturing.

WO2018/212420 describes a stereolithography apparatus (SLA) 3D printer comprising a plurality of molding plates; a molding plate moving means capable of controlling each of the molding plates; a resin container in which the molding plates and a photocurable liquid resin are contained; a light source for curing the liquid resin; and an optical path changing means capable of changing an optical path, wherein, when one of the molding plates is being moved by the molding plate moving means, the optical path changing means changes the optical path so that light from the light source is emitted at another molding plate not being moved.

### SUMMARY

In view of the above-mentioned desired properties of additive manufacturing systems and the above-mentioned and other drawbacks of the prior art, it is an object of the present invention to provide an additive manufacturing system capable of large-scale production. This can be achieved by an additive manufacturing system comprising a pulsed laser arranged to emit selectively and controllably reflect a laser pulse towards a selected one of a plurality of light-redirecting elements. According to the invention, a rotating reflecting element is configured to be tilted such that the laser can be redirected to reflecting elements located in different horizontal planes.

Each light-redirecting element is further arranged to receive and redirect the laser pulse towards a work surface which may be based on one or more conveyor-belts. The raw material on the belt, such as a metal-based material for additive manufacturing, is supplied continuously to enable a ceaseless production line.

The additive manufacturing system is operated by controlling the pulsed laser to emit a laser pulse towards the rotating reflecting element, where the laser pulse is reflected towards a light-redirecting element which advantageously comprises a focusing element such as a lens for focusing the laser pulse onto a point on the work surface. The additive manufacturing system may also comprise a distribution system for distributing additive material onto the work surface. Next, when the focused laser pulse hits the work surface where an additive material such as a powdered alloy is located, the additive material melts and solidifies. For the next laser pulse, the rotating reflecting element has moved such that the next laser pulse is reflected to another light-redirecting element, which in turn is arranged to focus the laser pulse to another point on the work surface.

Thereby, by means of the rotating reflecting element, laser pulses can be distributed over a large area via the plurality of light-redirecting elements. Moreover, the described system is easily scalable by increasing the number of light-redirecting elements and by increasing the area of the work surface, or by using a plurality of work surfaces. Additionally, the temperature distribution in the manufacturing facility is preferably controlled to assure the quality of the additively manufactured parts.

Accordingly, by means of the described additive manufacturing system, the production rate can be increased by orders of magnitude compared to single object additive manufacturing systems. This may lead to advantages related to economy of scale and increase the environmental performance of air/ground vehicles. Moreover, when the costs and yields of components from additive manufacturing plants are comparable to that from conventional manufacturing plants, wide-spread usage of finely tuned, on-demand manufactured components will boosted.

### BRIEF DESCRIPTION OF DRAWINGS

FIG. 1 is a schematic illustration of an additive manufacturing system according to an embodiment not part of the invention;
FIG. 2 is a schematic illustration of an additive manufacturing system according to an embodiment not part of the invention;
FIG. 3 is a schematic illustration of an additive manufacturing system according to an embodiment of the invention;
FIGS. 4A-B are schematic illustrations of rotating reflecting elements of an additive manufacturing system according to embodiments of the invention;
FIG. 5 is a schematic illustration of a light-redirecting element of an additive manufacturing system according to an embodiment of the invention;
FIG. 6 is a flow chart outlining the general steps of a method of controlling an additive manufacturing system according to an embodiment of the invention.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. Like reference characters refer to like elements throughout.

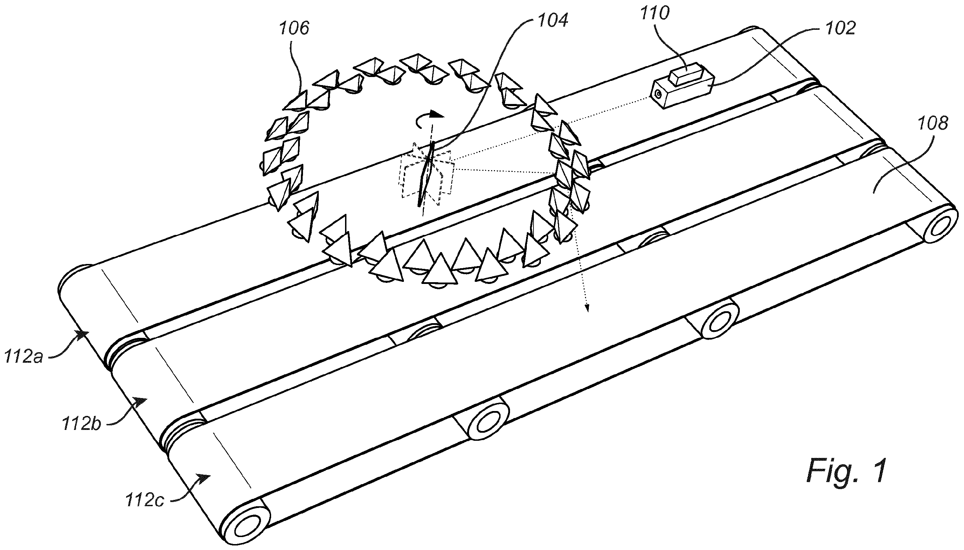

Fig. 1 schematically illustrates an additive manufacturing system 100 comprising a pulsed laser 102, a rotating reflecting element 104 and a plurality of light-redirecting elements 106. The pulsed laser 102 is arranged and configured to emit a high energy laser pulse impinging onto the rotating reflecting element 104 at a point in time where the rotating reflecting element 104 is orientated such that the laser pulse is reflected towards one of the light-redirecting elements 106. At the light-redirecting element 106, the laser pulse is redirected towards a predetermined point on the work surface 108 to melt an additive manufacturing material. The additive manufacturing material may be a metal-based material, a thermoplastic material, a polymer or any other material suitable for use in additive manufacturing.

The additive manufacturing system further comprises a control unit 110 arranged and configured to control and synchronize the pulsed laser 102 and the rotating reflecting element 104 such that a laser pulse is only emitted when the rotating reflecting element 104 is in a position to reflect the laser pulse towards a light-redirecting element 106. The control unit 110 may include a microprocessor, microcontroller, programmable digital signal processor or another programmable device as well as an interface to a computer. The control unit 110 may also, or instead, include an application specific integrated circuit, a field-programmable gate array or programmable array logic, a programmable logic device, or a digital signal processor. Where the control unit 110 includes a programmable device such as the microprocessor, microcontroller or programmable digital signal processor mentioned above, the processor may further include computer executable code that controls operation of the programmable device.

The control unit 110 is further configured to control the rotating reflecting element 104 and the pulsed laser 102 so that two consecutive laser pulses are reflected to two different light-redirecting elements 106. By ensuring that consecutive laser pulses are reaching different light-redirecting elements 106, the cooling need for the light-redirecting elements 106 is reduced.

A pulsed laser suitable to be used in the described system may have a pulse-width as low as 6ns. Taking an example where the rotating reflecting element 104 is rotating at a speed of 3000rps and with light-redirecting elements 106 distributed in a circle at every 10 degrees, each light-redirecting element 106 could thereby in principle receive over 20000 pulses from the laser before the rotating reflecting element 106 has rotated sufficiently for redirecting the laser pulses to the next light-redirecting element 106. A laser pulse as referred to herein may thus consist of a burst of shorter pulses or a pulse-train depending e.g. on the properties of the pulsed laser and on the amount of energy required for each pulse illuminating the work surface 108 to melt the additive material. The skilled person readily realizes that the specific parameters such as pulse length, power of the laser, rotation speed of the rotating reflecting element 104 etc. are determined based on the required properties of the system, on the additive material used and of the properties of the components to be manufactured. In the currently described applications, a high-power Nd:YAG laser could be used.

The light-redirecting elements 106 may also be arranged with a space in between adjacent elements in which case the pulsed laser 102 is controlled to not emit any pulses when the rotating reflecting element 104 is in a position where received laser pulses would not be reflected towards a light-redirecting element 106.

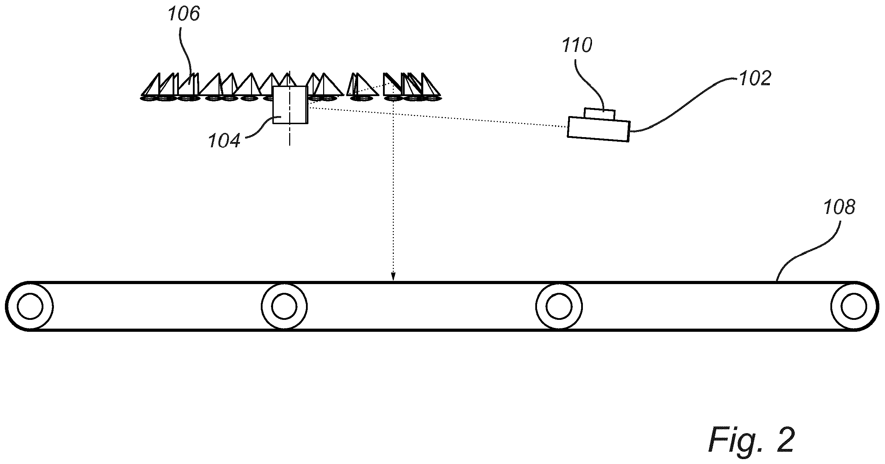

In the embodiment shown by Fig. 1 and further illustrated by the side view perspective of Fig. 2, the pulsed laser 102 is arranged to emit laser pulses in a substantially horizontal direction towards the rotating reflecting element 104 which is rotating about a vertical axis. The plurality of light-redirecting elements 106 are circumferentially arranged around the centrally located rotating reflecting element 104. The pulsed laser 102, the rotating reflecting element 104 and the plurality of light-redirecting elements 106 are here arranged in the same horizontal plane. The laser 102 is for simplicity illustrated as being arranged in a tilted relation to the horizontal plane of the light-redirecting elements 106. However, the laser 102 may equally well be aligned precisely with the horizontal plane of the light-redirecting elements as long as there is a gap between two adjacent elements allowing the laser pulse to reach the centrally located rotating reflecting element 104. As illustrated in Figs. 1-2, the light-redirecting elements are arranged in a circular pattern. However, other configurations are also possible, such as an ellipsoid pattern or the like. The light-redirecting elements 106 are arranged to redirect the laser pulse to travel in a substantially vertical direction towards the work surface 108. The plurality of light-redirecting elements 106 are thus arranged to redirect a laser pulse from a horizontal propagation direction to a vertical propagation direction. It should be noted that other orientations of the optical system components are equally possible. The laser 102 may for example be offset and/or tilted in relation to the horizontal plane of the rotating reflecting element 106 and the light-redirecting elements 108. The rotating reflecting element 106 may for example be arranged on a tiltable central axis. However, other ways of controlling a tilt of the rotating reflecting element are also possible, such as a rail-mounted rotating reflecting element 104 where the rail is curved to produce a varying tilt of the reflecting element as it moves along the rail.

Furthermore, the work surface 108 illustrated in Fig. 1 consists of a plurality of conveyor belts 112a-c. The conveyor belts 112a-c can be controlled individually by the control unit 110 so that the laser pulses are reaching the desired positions on the work surface 108. It is also possible to use other types of work surfaces adapted for large scale manufacturing, such as work surfaces moving on sliders, rollers, rails wheels or other types of automated feeder arrangements

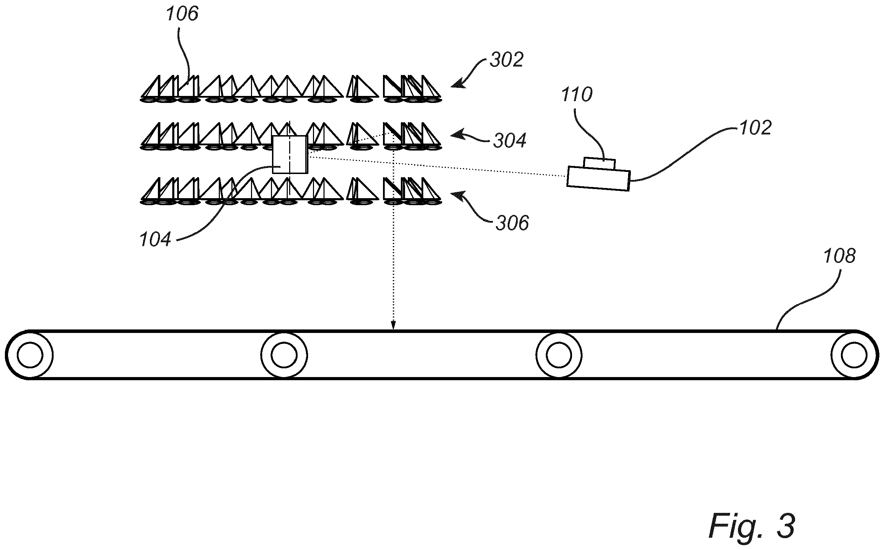

Fig. 3 schematically illustrates an embodiment of the system comprising three distributions of light-redirecting elements 302, 304, 306 located in three different horizontal planes. The laser pulses can be reflected to light-redirecting elements in the respective planes by tilting the rotating reflecting element 104. In the described embodiment, each distribution of light-redirecting elements 106 may be arranged and configured to redirect laser pulses onto a corresponding respective work surface 108. The plurality of light-redirecting elements 106 may also be divided into subsets of light-redirecting elements, wherein each subset of light-redirecting elements is arranged to redirect light onto one unique area-portion on the work surface. By using two or more lasers, it is even possible to illuminate two or more portions of an actual additively manufactured component on the conveyor-belt, leading to even higher yield. Accordingly, the light-redirecting elements 106 may be arranged in three dimensions to increase the number of possible light-redirecting elements 106, thereby potentially increasing the throughput of the manufacturing system. An additional advantage of by increasing the number of light-redirecting elements 106 is that the cooling need for each element may be reduced since the system could be controlled so that the time between two laser pulses reaching any given light-redirecting element 106 can be increased.

The additive manufacturing system 100 may further comprise a cooling arrangement (not shown) arranged to cool the rotating reflecting element 104. The rotating reflecting element 104 may be actively or passively cooled using e.g. cooling flanges, a heat sink, a fluid coolant system or the like. Since the rotating reflecting element 104 will receive all of the emitted laser pulses, the need for cooling is much greater than for the light-redirecting elements 106. However, the system may also comprise a cooling arrangement for cooling the light redirection elements 106 and the laser 102.

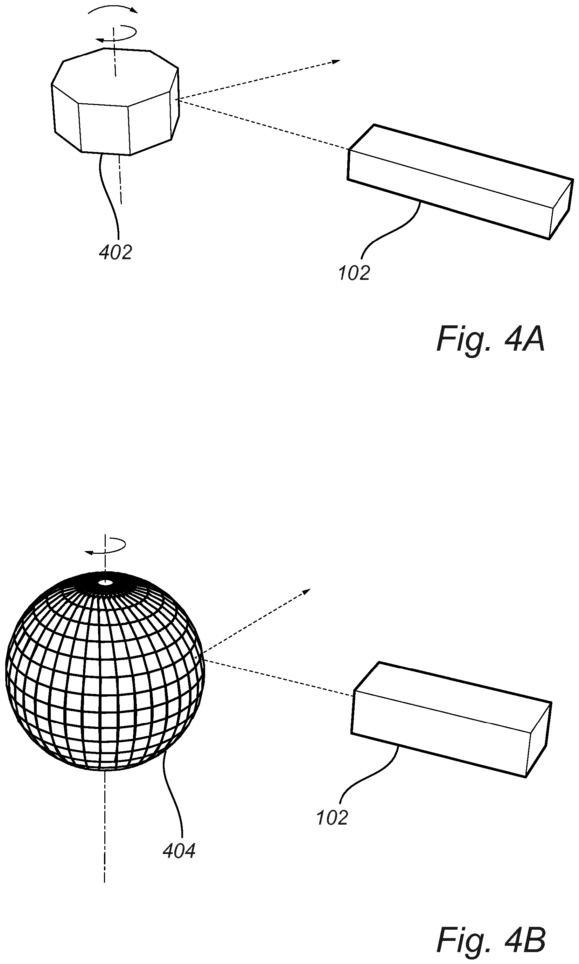

The rotating reflecting element 104 may be a one- or two-sided planar mirror. The rotating reflecting element 104 may also be a multi-faceted mirror 402 as schematically illustrated in Fig. 4A. The illustrated multi-faceted mirror 402, is here a prism-shaped mirror having more than two reflecting sides. Moreover, the multi-faceted mirror 402 may also have a first side with a first tilt angle in relation to a horizontal XY-plane and a second side with a second tilt angle in relation to the horizontal plane, the first tilt angle being different from the second tilt angle. By providing a one- two- or multi-faceted mirror with a controllable tilt angle or with different tilt angles on different surfaces, it is possible to arrange light-redirecting elements in several different horizontal planes as illustrated in Fig. 3.

Fig. 4B schematically illustrates a rotating reflecting element 106 in the form of a multi-faceted mirror 404. Accordingly, the rotating reflecting element 104 may also be provided in the form of a substantially spherical object having a plurality of reflecting surfaces similar to a discoball. Since the multi-faceted mirror 404 comprises a plurality of surfaces having different angles in relation to the horizontal plane, a distribution of the laser pulse to different horizontal planes can be achieved by aiming the laser at different surfaces of the mirror 404. The multi-faceted mirror 404 may also be provided in the form of a truncated sphere so that the shape is more like a cylinder having a plurality of reflecting surfaces at different angles.

To get the laser to hit different surfaces of the multi-faceted mirror 404, the mirror 404 may for example be translatable in a vertical direction so that it can be controllably moved up and down, thereby making a stationary laser hit different surfaces of the mirror 404. It is also possible to arrange the rotatable multi-faceted mirror 404 on a tiltable axis to control which surface is hit by the laser. Moreover, it is also possible to controllably move the laser such that different surfaces of the multi-faceted mirror is hit by an emitted laser pulse. Thereby a fully three-dimensional system can be provided where a plurality of light-redirecting elements 106 can be arranged in a volume around the rotating reflecting element 104.

The rotating reflecting element 104 may also be provided in the form of a prism, e.g. a multi-faceted prism. A prism may provide a higher reflection efficiency compared to a mirror and a prism with the required properties may also be provided at lower cost. A further advantage of using a prism is related to the thermal behavior. A prism could be assumed to expand uniformly when heated, thereby essentially maintaining its optical properties whereas the optical properties of a mirror could be negatively influenced by anisotropic thermal expansion or contraction. A prism may also be configured to act as a beam-splitter, so that two or more lasers can be arranged in series.

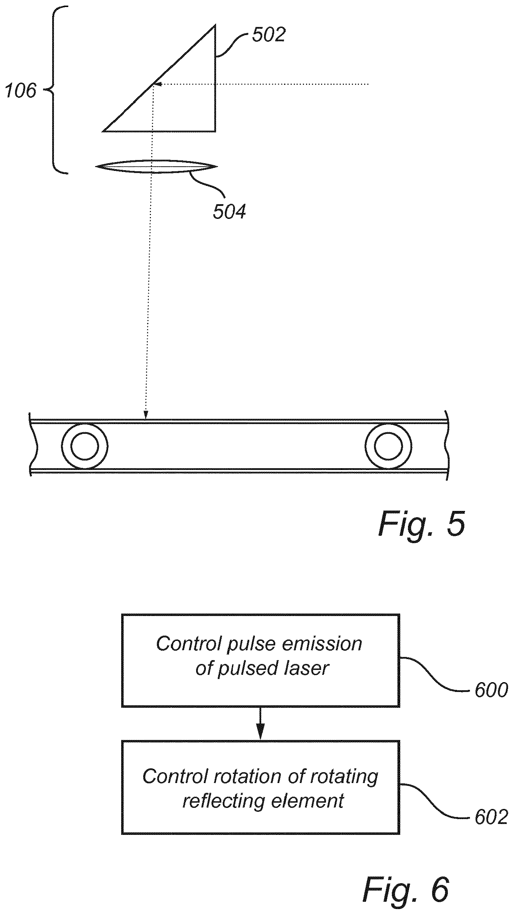

The light redirection elements 106 may also be provided in the form of mirrors or prisms. Fig. 5 schematically illustrates a light-redirecting element 106 comprising a prism 502 and a biconvex focusing lens 504. Preferably, the focal point is located at or near the work surface. The focal point may also be adjustable, for example by providing a configuration where the lens is movable in the vertical direction.

The light redirection elements 106 may also be adjustable, e.g. rotatable, translatable and/or tiltable such that each light redirection element 106 is controllable to be able to redirect laser pulses onto one or more predetermined area-portions of the work surface, where the plurality of light-redirecting elements together cover the entire effective work surface.

Fig. 6 is a flow chart outlining the general steps of a method of controlling the additive manufacturing system. In general, the method comprises controlling 600 the pulse emission of a pulsed laser 102 and controlling 602 the rotation of a rotating reflecting element 104 such that an emitted laser pulse is reflected by the rotating reflecting element 104 towards one of a plurality of light-redirecting elements 106, wherein the light-redirecting element 106 is arranged to receive and redirect the laser pulse towards a work surface. Depending on the configuration of the additive manufacturing system, the method may further comprise additional steps such as controlling the amount of tilt for the rotating reflecting element so that the embodiments of the invention which comprise e.g. a multi-faceted mirror system focuses the laser onto the right light-redirecting element. The method may also comprise updating a focusing distance of a light-redirecting element comprising a lens depending on the position of the actual light-redirecting element so that the right part of the material on the conveyor-belt will be illuminated.

In order to ensure that the additive material is properly melted, the method may also comprise controlling the movement of the work surface, e.g. by regulating a pace of the conveyor belt, to allow for melting of the powder material and controlling the powder material supply to be able to supply new powdered alloy for additive layers building up the components. Moreover, the method may comprise the steps of controlling the amount of cooling of the components in the system and regulating the ambient temperature inside the manufacturing facility since a rigorous temperature control is required for controlling the optical aberrations.

An advantage of the described system is that it is easily scalable for example by arranging light-redirecting elements in a multitude of planes, by using additional work surfaces or even by providing additional rotating reflecting elements along with a laser having a controllable and variable mission direction. By using prismatic optics, a multitude of lasers can be allocated in series for desired power. Additionally, filters and prismatic optics may allow for different lasers with different properties to be used interchangeably/simultaneously.

Even though the invention has been described with reference to specific exemplifying embodiments thereof, many different alterations, modifications and the like will become apparent for those skilled in the art. Also, it should be noted that parts of the system may be omitted, interchanged or arranged in various ways, the additive manufacturing system yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. An additive manufacturing system (100) comprising a pulsed laser (102) arranged to emit light towards a rotating reflecting element (104), wherein the rotating reflecting element is arranged to selectively reflect a laser pulse towards one of a plurality of light-redirecting elements (106), each light-redirecting element being arranged to receive and redirect the laser pulse towards a work surface (108), **characterised in that**
the rotating reflecting element is configured to be tilted such that the laser can be redirected to reflecting elements located in different horizontal planes.

2. The system according to any one of the preceding claims, further comprising a control unit (110) configured to control the rotating reflecting element and the pulsed laser such that a laser pulse is only emitted when the rotating reflecting element is in a position to reflect the laser pulse towards a light-redirecting element.

3. The system according to claim 2, wherein the control unit is further configured to control the rotating reflecting element and the pulsed laser so that two consecutive laser pulses are reflected to two different light-redirecting elements, wherein the laser pulse consists of a burst of shorter pulses or a pulse-train.

4. The system according to any one of the preceding claims, wherein the rotating reflecting element is rotating about a vertical axis.

5. The system according to any one of the preceding claims, wherein the plurality of light-redirecting elements are arranged to redirect a laser pulse from a horizontal propagation direction to a vertical propagation direction.

6. The system according to any one of the preceding claims, wherein the plurality of light-redirecting elements are circumferentially arranged around a centrally located rotating reflecting element.

7. The system according to any one of the preceding claims, wherein the rotating reflecting element is a mirror.

8. The system according to claim 7, wherein the rotating reflecting element is a multi-faceted mirror, the multi-faceted mirror having a first surface with a first tilt angle in relation to a horizontal plane and a second surface with a second tilt angle in relation to the horizontal plane, the first tilt angle being different from the second tilt angle.

9. The system according to any one of claims 1 to 6, wherein the rotating reflecting element is a prism.

10. The system according to any one of the preceding claims, wherein each light-redirecting element further comprises a lens arranged and configured to focus light redirected by the light-redirecting element onto a point on the work surface.

11. 12. The system according to any one of the preceding claims, further comprising a work surface in the form of a plurality of conveyor belts.

12. The system according to any one of the preceding claims, wherein the plurality of light-redirecting elements are divided into subsets of light-redirecting elements, wherein each subset of light-redirecting elements is arranged to redirect light onto one unique area portion of the work surface.

13. A method for controlling an additive manufacturing system, the method comprising controlling the pulse emission of a pulsed laser and controlling the rotation of a rotating reflecting element such that an emitted laser pulse is reflected by the rotating reflecting element towards one of a plurality of light-redirecting elements, wherein the light-redirecting element is arranged to receive and redirect the laser pulse towards a work surface and **characterised in that** the rotating reflecting element is controllably tiltable such that the laser can be redirected to reflecting elements located in different horizontal planes.

## Patentansprüche

1. Generatives Fertigungssystem (100), das einen gepulsten Laser (102) umfasst, der angeordnet ist, um Licht in Richtung eines rotierenden reflektierenden Elements (104) zu emittieren, wobei das rotierende reflektierende Element angeordnet ist, um selektiv einen Laserpuls in Richtung von einem von einer Vielzahl von lichtumlenkenden Elementen (106) zu reflektieren, wobei jedes lichtumlenkende Element so angeordnet ist, dass es den Laserpuls empfängt und in Richtung einer Arbeitsoberfläche (108) umlenkt; **dadurch gekennzeichnet, dass**
das rotierende reflektierende Element ausgestaltet ist, um so gekippt zu werden, dass der Laser auf reflektierende Elemente umgelenkt werden kann, die sich in unterschiedlichen horizontalen Ebenen befinden.

2. System nach einem der vorhergehenden Ansprüche, des Weiteren umfassend eine Steuereinheit (110), die ausgestaltet ist, um das rotierende reflektierende Element und den gepulsten Laser so zu steuern, dass nur dann ein Laserpuls emittiert wird, wenn sich das rotierende reflektierende Element in einer Position befindet, um den Laserpuls in Richtung eines lichtumlenkenden Elements zu reflektieren.

3. System nach Anspruch 2, wobei die Steuereinheit des Weiteren ausgestaltet ist, um das rotierende reflektierende Element und den gepulsten Laser so zu steuern, dass zwei aufeinander folgende Laserpulse zu zwei unterschiedlichen lichtumlenkenden Elementen reflektiert werden, wobei der Laserpuls aus einer Folge kürzerer Pulse oder einer Pulskette besteht.

4. System nach einem der vorhergehenden Ansprüche, wobei das rotierende reflektierende Element um eine Vertikalachse rotiert.

5. System nach einem der vorhergehenden Ansprüche, wobei die Vielzahl von lichtumlenkenden Elementen so angeordnet ist, dass ein Laserimpuls von einer horizontalen Ausbreitungsrichtung zu einer vertikalen Ausbreitungsrichtung umgelenkt wird.

6. System nach einem der vorhergehenden Ansprüche, wobei die Vielzahl der lichtumlenkenden Elemente im Umfang um ein zentral positioniertes rotierendes reflektierendes Element angeordnet ist.

7. System nach einem der vorhergehenden Ansprüche, wobei das rotierende reflektierende Element ein Spiegel ist.

8. System nach Anspruch 7, wobei das rotierende reflektierende Element ein Facettenspiegel ist, wobei der Facettenspiegel eine erste Oberfläche mit einem ersten Kippwinkel in Bezug zu einer horizontalen Ebene und eine zweite Oberfläche mit einem zweiten Kippwinkel in Bezug zu der horizontalen Ebene hat, wobei der erste Kippwinkel sich von dem zweiten Kippwinkel unterscheidet.

9. System nach einem der Ansprüche 1 bis 6, wobei das rotierende reflektierende Element ein Prisma ist.

10. System nach einem der vorhergehenden Ansprüche, wobei jedes lichtumlenkende Element des Weiteren eine Linse umfasst, die angeordnet und ausgestaltet ist, um Licht, welches durch das lichtumlenkende Element umgelenkt wurde, auf einen Punkt auf der Arbeitsoberfläche zu fokussieren.

11. System nach einem der vorhergehenden Ansprüche, des Weiteren umfassend eine Arbeitsoberfläche in Form einer Vielzahl von Förderbändern.

12. System nach einem der vorhergehende Ansprüche, wobei die Vielzahl von lichtumlenkenden Elementen in Teilmengen von lichtumlenkenden Elementen unterteilt wird, wobei jede Teilmenge der lichtumlenkenden Elemente angeordnet ist, um Licht auf einen eindeutigen Gebietabschnitt der Arbeitsoberfläche umzulenken.

13. Verfahren zum Steuern eines generativen Fertigungssystems, wobei das Verfahren Steuern der Pulsemission eines gepulsten Lasers und Steuern der Rotation eines rotierenden reflektierenden Elements umfasst, so dass ein emittierter Laserpuls durch das rotierende reflektierende Element in Richtung von einem von einer Vielzahl lichtumlenkender Elemente reflektiert wird, wobei das lichtumlenkende Element angeordnet ist, um den Laserpuls zu empfangen und in Richtung einer Arbeitsoberfläche umzulenken, und **dadurch gekennzeichnet, dass** das rotierende reflektierende Element steuerbar kippbar ist, so dass der Laser auf reflektierende Elemente umgelenkt werden kann, die sich in unterschiedlichen horizontalen Ebenen befinden.

## Revendications

1. Système de fabrication additive (100) comprenant un laser pulsé (102) conçu pour émettre une lumière vers un élément réfléchissant rotatif (104), dans lequel l'élément réfléchissant rotatif est conçu pour réfléchir sélectivement une impulsion laser vers un élément d'une pluralité d'éléments de redirection de la lumière (106), chaque élément de redirection de la lumière étant conçu pour recevoir et rediriger l'impulsion laser vers une surface de travail (108), **caractérisé en ce que** l'élément réfléchissant rotatif est conçu pour être incliné de telle sorte que le laser puisse être redirigé vers des éléments réfléchissants situés dans des plans horizontaux différents.

2. Système selon l'une quelconque des revendications précédentes, comprenant en outre une unité de commande (110) conçue pour commander l'élément réfléchissant rotatif et le laser pulsé de telle sorte qu'une impulsion laser ne soit émise que lorsque l'élément réfléchissant rotatif est dans une position permettant de réfléchir l'impulsion laser vers un élément de redirection de la lumière.

3. Système selon la revendication 2, dans lequel l'unité de commande est en outre conçue pour commander l'élément réfléchissant rotatif et le laser pulsé de sorte que deux impulsions laser consécutives soient réfléchies vers deux éléments de redirection de la lumière différents, dans lequel l'impulsion laser consiste en une salve d'impulsions plus courtes ou en un train d'impulsions.

4. Système selon l'une quelconque des revendications précédentes, dans lequel l'élément réfléchissant rotatif tourne autour d'un axe vertical.

5. Système selon l'une quelconque des revendications précédentes, dans lequel la pluralité d'éléments de redirection de la lumière est conçue pour rediriger une impulsion laser d'une direction de propagation horizontale à une direction de propagation verticale.

6. Système selon l'une quelconque des revendications précédentes, dans lequel la pluralité d'éléments de redirection de la lumière est agencée circonférentiellement autour d'un élément réfléchissant rotatif situé de façon centrale.

7. Système selon l'une quelconque des revendications précédentes, dans lequel l'élément réfléchissant rotatif est un miroir.

8. Système selon la revendication 7, dans lequel l'élément réfléchissant rotatif est un miroir à facettes multiples, le miroir à facettes multiples ayant une première surface avec un premier angle d'inclinaison par rapport à un plan horizontal et une seconde surface avec un second angle d'inclinaison par rapport au plan horizontal, le premier angle d'inclinaison étant différent du second angle d'inclinaison.

9. Système selon l'une quelconque des revendications 1 à 6, dans lequel l'élément réfléchissant rotatif est un prisme.

10. Système selon l'une quelconque des revendications précédentes, dans lequel chaque élément de redirection de la lumière comprend en outre une lentille conçue et configurée pour focaliser la lumière redirigée par l'élément de redirection de la lumière sur un point de la surface de travail.

11. Système selon l'une quelconque des revendications précédentes, comprenant en outre une surface de travail sous la forme d'une pluralité de bandes transporteuses.

12. Système selon l'une quelconque des revendications précédentes, dans lequel la pluralité d'éléments de redirection de la lumière est divisée en sous-ensembles d'éléments de redirection de la lumière, dans lequel chaque sous-ensemble d'éléments de redirection de la lumière est conçu pour rediriger la lumière sur une zone unique de la surface de travail.

13. Procédé de commande d'un système de fabrication additive, le procédé comprenant la commande de l'émission d'impulsions d'un laser pulsé et la commande de la rotation d'un élément réfléchissant rotatif de telle sorte qu'une impulsion laser émise soit réfléchie par l'élément réfléchissant rotatif vers un élément d'une pluralité d'éléments de redirection de la lumière, dans lequel l'élément de redirection de la lumière est conçu pour recevoir et rediriger l'impulsion laser vers une surface de travail et **caractérisé en ce que** l'élément réfléchissant rotatif est inclinable d'une manière pouvant être commandée de telle sorte que le laser puisse être redirigé vers des éléments réfléchissants situés dans des plans horizontaux différents.
